# EUROPEAN PATENT APPLICATION

(11) **EP 1 319 967 A1**
(43) Date of publication of application: **18.06.2003**
(21) Application number: 01440418.0
(22) Date of filing: 13.12.2001
(51) Int. Cl.: G02B 6/34, G02B 6/125

(54) **Athermal arrayed waveguide grating (AWG) having thermal compensation in the slab waveguide**

(71) Applicant: ALCATEL, 75008 Paris (FR)
(72) Inventor: Lázaro Villa, José Antonio Dr., 70439 Stuttgart (DE)
(74) Representative: Lindner, Michael, Dipl.-Ing.

(57) **Abstract**

The invention relates to an athermal arrayed waveguide grating (10), comprising:
a) an input slab waveguide (16) being connected to at least one input waveguide (141...14n),
b) an output slab waveguide (18) being connected to at least one output waveguide (221...22m), and
c) a plurality of arrayed waveguides (201...20k) that
   i) are arranged between the input slab waveguide (16) and the output slab waveguide (18) and
   ii) are made of a first material whose refractive index has a first type of temperature dependence.

According to the invention, the input slab waveguide (16) comprises one single part (24) that is completely made of a second material having a refractive index with a second type of temperature dependence that is opposite to the first type of temperature dependence (Fig. 1).

## Description

The invention relates to an athermal arrayed waveguide grating according to the preamble of claim 1. It further relates to an optical module comprising such an arrayed waveguide grating and a method for athermalizing an arrayed waveguide grating.

Arrayed waveguide gratings (AWGs) are utilized as wavelength multi/demultiplexers in wavelength division multiplexing (WDM) optical communication systems. In such systems a plurality of signals with different carrier frequencies are transmitted simultaneously over a single optical waveguide, for example an optical fiber.

An AWG comprises an input slab waveguide and an output slab waveguide that is connected to the input slab waveguide by an array of dispersive waveguides. Light propagating in an input waveguide is coupled into the array via the input slab waveguide. If the device is designed as a demultiplexer, the optical path length difference between adjacent array arms equals an integer multiple of a central wavelength of the demultiplexer. As a consequence, the field distribution at the input aperture will be reproduced at the output aperture. Therefore, at this central wavelength, the light will focus in the center of the image plane, provided that the input waveguide is centered at the input plane. If the input wavelength is detuned from this central wavelength, phase changes will occur in the array arms. Due to the constant path length difference between adjacent waveguides, this phase change will increase linearly from the inner to the outer arrayed waveguides. This will cause the wave front to be tilted at the output aperture. Consequently the focal point in the image plane will be shifted away from the center. Thus the AWG allows the spatial separation of different wavelengths or frequencies.

One of the problems that are encountered in AWGs is the temperature sensitivity of the device. Since the waveguide material usually has a temperature-dependent refractive index, the channel wavelength of a multi/demultiplexer AWG shifts as the temperature varies. This shift, which is typical of the order of 0.01 nm/°C in silica-based devices, would result in a loss of signal or crosstalk in the optical communication system. As WDM systems are being designed towards smaller and smaller channel spacing (in the order of several nanometers or even less in the future), even a small temperature-dependent wavelength shift is of concern.

To accommodate the temperature variation due to environmental conditions in the field, the AWG is usually packaged in a sealed container with a thermal-electric temperature controller comprising a heater or a Peltier device. This controller keeps the temperature, and thus the channel wavelengths, at fixed values. However, this significantly increases the packaging cost.

Several approaches have been proposed to compensate for the temperature sensitivity of the AWGs. The general attempt is to construct athermal or passively temperature stabilized AWGs and thus to eliminate the need for temperature controllers.

One approach is to mount the device on a bimetal plate. In such a device, the bimetal plate applies a temperature-dependent stress to the waveguide that changes the grating pitch. This compensates for the wavelength shift caused by the thermal refractive index change. This method has been described by N. Ooba et al. in a paper entitled "Athermal Silica-Based Arrayed Waveguide Grating Multiplexer Using Bimetal Plate Temperature Compensator", Electron. Lett., 2000, 36, (21), pp. 1800-1801. The advantage of this method is that it can be applied to any type of AWG and causes no degradation in the AWG transmission characteristics. The attachment process of the AWG to the bimetal plate and the matching of the bimetal plate parameters to the AWG chip are, however, critical issues.

According to another approach, a triangularly shaped region is created in the arrayed waveguide section which is then filled with a material having a negative thermal coefficient, for example a polymer. By proper design of this filled region, the temperature dependence of the total optical path (comprising both the normal waveguide sections and the portion with negative thermal effects), due to refractive index changes, can be made to approach zero. The application of this technique in silica-based arrayed waveguide devices is described by Y. Inoue et al. in a paper entitled "Athermal Silica-Based Arrayed-Waveguide Grating (AWG) Multiplexer", ECOC'97 Technical Digest, TH3B, pp. 33-36. A major problem of this approach is that of insertion loss and fabrication complexity. By replacing a large section of the arrayed waveguide section with a slab containing the material with negative thermal index, lateral waveguiding is lost in this portion, increasing optical loss and crosstalk. Attempts to reduce these facts by breaking the triangular region into alternate waveguiding and compensator regions, as described by A. Kaneko et al. in a paper entitled "Athermal Silica-Based Arrayed Waveguide Grating (AWG) Multiplexer with New Low-Loss Groove Design", OFC'99 Technical Digest, TuO1 pp. 204-206, 1999, can decrease loss, but only at the expense of design and fabrication complexity.

As the aforementioned structure requires relatively precise trench formation to reduce the phase error and to match the polymer material properties such as the thermal index coefficient, yet another alternative approach has been proposed by K. Maru et al. in a paper entitled "Athermal and Center Wavelength Adjustable Arrayed-Waveguide Grating", OFC'2000 Technical Digest, WH3-1, pp. 130-132. This approach is based on the insertion of a polymer material within the input slab waveguide. To this end, several trenches of a crescent-like shape are formed in the input slab waveguide. Since the optical field is expanded in this region, this structure has advantages of better trench formation tolerance as well as lower diffraction loss. The appropriate crescent shape is designed to avoid undesired phase distortions, which can reduce additional loss and crosstalk penalties due to trench formation. The approach uses a Vernier-type silica PLC (Planar Lightwave Circuit) input waveguide chip with Y-branches to widen the mode field at the input slab waveguide. The center wavelength of the AWG can be tuned by changing the lateral position of the input waveguide chip in front of the input slab waveguide. Nevertheless, the formation of several narrow trenches that have to be filled with the polymer material remains a complicated issue. Strict fabrication tolerances have to be met in order to make the AWG almost completely independent of variations of the ambient temperature.

In view of the above, it is an object of the invention to provide a compact arrayed waveguide grating that is suitable for mass production and has a low loss and crosstalk penalties.

In the case of an athermal arrayed waveguide grating according to the preamble of claim 1, this object is achieved in that the input slab waveguide comprises one single part that is completely made of a second material, said second material having a refractive index with a second type of temperature dependence that is opposite to the first type of temperature dependence.

The inventor of the present invention has found out that it is sufficient to provide just one single part that is made of a material whose refractive index has an opposite type of temperature dependence as compared with the material the arrayed waveguides of the AWG are made of. Having only one such part considerably simplifies design and facilitates the fabrication of the AWG and, particularly, its input slab waveguide.

No particular restrictions have to be made with respect to the materials to be used. For example, conventional silica based materials may be employed as first materials. The second material may be chosen from a range of polymers that are already used in the prior art for compensating temperature-dependent wavelength shifts. It has merely to be ensured that the refractive index of both materials respond reversely to temperature changes. However, it is not necessary that the temperature-dependent refractive index change of both materials have also - if the different sign is ignored - the same absolute values.

Since light that propagates in the longer arrayed waveguide arms requires more "temperature compensation" than light in the shorter arms, the inventor further proposes a range of different solutions how this object can be advantageously achieved as well.

According to a first preferred embodiment, said part made of the second material is approximately wedge-shaped.

If this wedge-shaped part is correspondingly oriented in the input slab waveguide, the above-mentioned "temperature compensation" will be achieved with simple constructive means, namely by a suitable geometry of said part. This part may be integrated into the usual symmetrical shape of the input slab waveguide, or it may be attached to or inserted into a usual symmetric input slab waveguide as a kind of extension or insertion, respectively. For example, said wedge-shaped part could be centered in the middle of the input slab waveguide.

According to a preferred embodiment, however, said part adjoins a curved longitudinal end face of the input slab waveguide.

This is advantageous because light that propagates through the input slab waveguide has to pass only one interface between the first and the second material. Adverse effects that are caused by a sudden change of the refractive index are therefor minimized.

In order to make sure that all light that propagates through the input slab waveguide is guided also through the second material for temperature compensation, it is further preferred that said part extends laterally from one side of the input slab waveguide to the opposite side.

It is further envisaged that said part completely forms the input slab waveguide.

If the input slab waveguide is completely made of the second material, no trench at all has to formed within the first material. Thus the fabrication of the device is considerably simplified. This low-cost design is, above all, advantageous if a second material is used that has very low optical losses, or in a case when larger losses are of no major concern for whatever reasons.

Instead of or in addition to having a wedge-shaped part made of the second material, temperature compensation may be achieved or enhanced, respectively, in that the at least one input waveguide and/or the plurality of arrayed waveguides is connected to the input slab waveguide such that, in the plane of the grating, an angle other than 90° is formed between the at least one input waveguide and/or the plurality of arrayed waveguides, and a curved longitudinal end face of the input slab waveguide.

By deviating from the usual design in which the input waveguides and the arrayed waveguides enter the curved longitudinal end faces of the input slab waveguide perpendicularly, the optical path of light being coupled into the input slab waveguide is altered. By choosing the design parameters of the input slab waveguides appropriately, such a design ensures that light that propagates to the longer waveguide arms is guided in the second material for a longer distance than light that is guided in the shorter waveguide arms. Thus, the overall shape of the input slab waveguide may be conventional, i.e. symmetric, even if the input slab waveguide is completely made of the second material.

In combination with a wedge-shaped part made of the second material, this "tilting" of the input and/or arrayed waveguides allows to reduce the area of said part. Since said second materials usually causes higher optical losses than silica-based materials, optical losses due to the second material can thus be reduced. The inventor has also found out that such a design with "tilted" input and/or arrayed waveguides may be also advantageous in AWGs in which the input slab waveguide contains more than one part made of said second material.

Particularly with respect to the above-mentioned design improvement, it is further preferred if the at least one input waveguide is laterally offset with respect to a symmetrical position.

If light enters the input slab waveguide obliquely at its curved longitudinal end face, the effect of propagating different distances within the second material may be further enhanced by such a lateral offset position of the input waveguides.

According to another preferred embodiment of the present invention, a plurality of input waveguides is separated at the input slab waveguide by a spacing Dᵢₙ, and a plurality of output waveguides is separated at the output slab waveguide by a spacing Dₒᵤₜ, wherein Dᵢₙ equals Dₒᵤₜ.

With known AWG designs, these design parameters are chosen so that Dᵢₙ is different from Dₒᵤₜ. This is, for example, described by K. Okamoto in a paper entitled "Recent Progress of Integrated Optics Planar Lightwave Circuits", Optical and Quantum Electronics 31 (1999), pp. 107-129, see particularly p. 114. By choosing different spacings at the input and the output slab waveguide, it is possible to tune the center path wavelength of the AWG by choosing a particular input waveguide out of a plurality of input waveguides (so-called "Vernier design").

According to the invention, however, equal spacings between the input waveguides of the input slab waveguide and the output waveguide of the output slab waveguide are chosen. Then the selection of a particular input waveguide does not - as long as the overall slab geometry is maintained - shift the central wavelength of the device. However, it is now possible to fine-tune the thermal compensation, so that light propagates through the second material exactly the distance that is required for compensating the thermal refractive index changes within the first material. This method of fine-tuning the AWG allows to considerably relax the manufacturing tolerances with respect to the geometry of said part made of the second material.

This kind of "thermal Vernier design" is particularly advantageous in combination with input waveguides that do not perpendicularly enter the input slab waveguide. Even in the case of larger fabrication tolerances, it is then possible to determine an athermal condition for the arrayed waveguide grating. Thus this new design is suitable for mass production because the fabrication tolerances can be relaxed and less fabrication steps are required as compared with designs in which a plurality of small trenches have to be filled with a suitable material.

It is understood that the features mentioned above and those yet to be explained below can be used not only in the respective combinations indicated, but also in other combinations or in isolation, without leaving the context of the present invention.

Further features and advantages of the invention can be taken from the subsequent description of preferred embodiments with reference to the drawings.

### In the drawings:

- Fig. 1: shows a schematic top view (not to scale) onto an arrayed waveguide grating according to the present invention;
- Figs. 2, 3 and 4: show different embodiments of an input slab wave-guide that may be used in the arrayed waveguide grating of Fig. 1;
- Fig. 5: shows, in a more detailed and enlarged view, another embodiment of an input slab waveguide in which the input waveguides do not enter the input slab waveguide perpendicularly;
- Fig. 6: the input slab waveguide of Fig. 5 with laterally offset input waveguides and arrayed waveguides that are connected to the input slab waveguide non-perpendicularly;
- Fig. 7: an enlarged view of an input slab waveguide according to the present invention for explaining an inventive method of fine-tuning the athermal compensation.

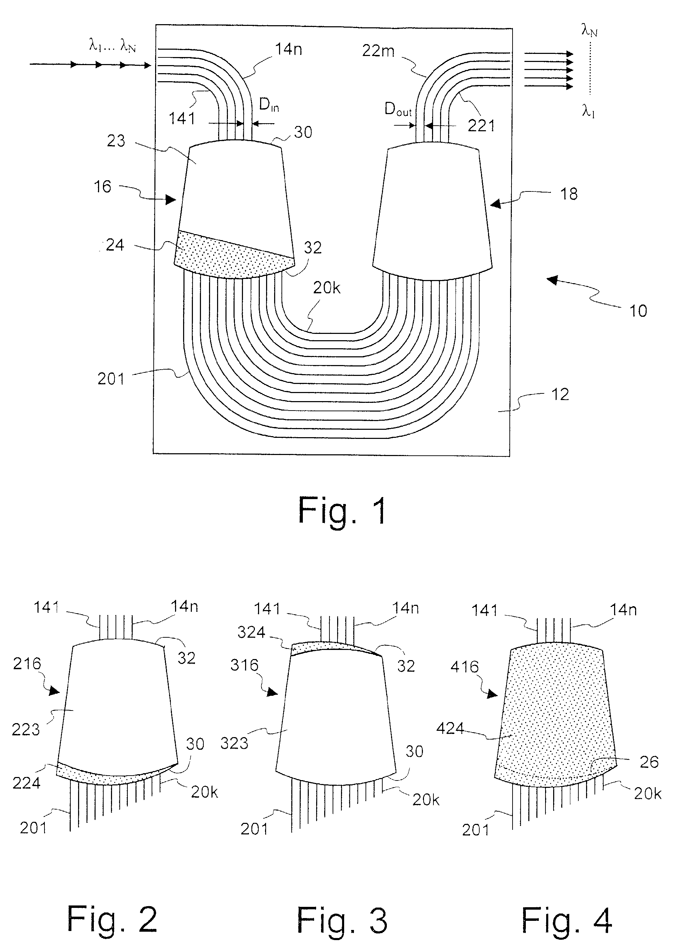

Fig. 1 shows an arrayed waveguide grating (AWG) 10 in a schematic and simplified plan view (not to scale). The AWG 10 comprises a substrate 12 on which n input waveguides 141...14n are formed. The input waveguides 141...14n are connected to an input slab waveguide 16 which is connected to an output slab waveguide 18 via k arrayed waveguides 201...20k. The output slab waveguide 18 has the same geometry as the input slab waveguide 16. At the rear side of the output slab waveguide 18 m output waveguides 221...22m are formed on substrate 12.

According to the invention, the input slab waveguide 16 comprises one single part 24 that is made of a material whose refractive index has a temperature dependence that is - qualitatively - opposite to the corresponding temperature dependence of the material the arrayed waveguides 201...20k are made of. Usually all waveguides of an AWG are made of the same material, e.g. on the basis of silica. Part 24 may then, for example, be made of certain kinds of polymers that are known as such in the art and are therefore not explained herein in detail. For the ease of description, part 24 is hereinafter simply referred to as "polymer part", but without restricting the invention to such materials. The remaining part 23 of the input slab waveguide 16, which is made of the same or a similar material as the arrayed waveguides 201...20k, will, for the same reason, be referred to as "glass part", but without restricting the invention to such a material.

The material for part 24 should be chosen such that, on the one hand, a sufficient compensation of the thermally induced change of refractive index in the arrayed waveguides 201...20k is achieved. On the other hand, a material should be selected in which light suffers minimal optical losses. Since materials with strong temperature dependence often lead to significant optical losses, a tradeoff between both aspects has to be found, e.g. by carefully testing different design parameters in a simulation.

The overall geometric shape of the input slab waveguide 16 is conventional, i.e. symmetrical with a curved front end face 30 and a rear end faced of the same curvature 32. The polymer part 24 adjoins this rear end face 32 so that light propagating within the input waveguide slab 16 undergoes only one material transition.

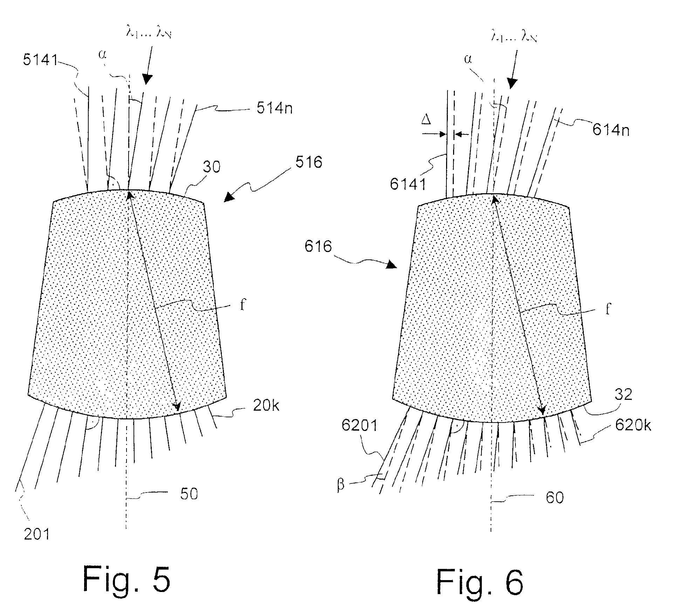

Fig. 1 is, as usual in like respresentations, simplified in that the input waveguides 141... 14n and the arrayed waveguides 201...20k seem to enter the input waveguide slab 16 at different angles. As can be seen below in the enlarged view of Fig. 5, however, these waveguides (see broken lines) actually enter the input slab waveguide 16 exactly at right angles. The same applies to the output slab waveguide 18 correspondingly.

The AWG 10 may be fabricated by using any known method for fabricating planar light wave circuits, for example by a combination of flame hydrolysis deposition (FHD) and reactive iron etching (RIE). According to this method, fine glass particles are produced in an oxy-hydrogen flame and deposited on a silicon or silica substrate. After depositing under-cladding and core glass layers, the wafer is heated to a high temperature for consolidation. The circuit pattern is fabricated by photolithography and reactive iron etching. The core ridge structures are covered with one or more over-cladding layers and consolidated again.

If light comprising a mixture of different wavelengths λ₁...λ_{N} is coupled into one of the input waveguides 141...14n, it propagates through input slab waveguide 16, thereby passing through the glass part 23 and the polymer part 24. Since the polymer part 24 has approximately the shape of a wedge, light that is coupled into one of the outer arrayed waveguide arms, for example arm 201, propagates a longer distance in the polymer part 24 than light that enters one of the inner arrayed waveguide arms, for example arm 20k. This ensures that thermally induced wavelength shifts in the arrayed waveguide arms 201...20k are correspondingly compensated for.

After having been guided within the arrayed waveguide arms 201...20k, the light containing a mixture of wavelengths λ₁...λ_{N} enters the output slab waveguide 18. There the light is, depending on its wavelength, focused onto the output waveguides 221...22n so that in each single output waveguide only light of a particular wavelength λᵢ propagates. AWG 10 therefor functions as a demultiplexer. If the path of light is reversed, AWG 10 functions as a multiplexer.

Figs. 2, 3 and 4 show alternative designs of the input slab waveguide 16.

In the embodiment of Fig. 2, input slab waveguide 216 deviates from the regular symmetric form of usual input slab waveguides in that a polymer part 224 is formed as a kind of extension to a glass part 223 having the usual symmetric geometry. The polymer part 224 has again approximately the form of a wedge.

In the embodiment shown in Fig. 3, a polymer part 324 is located at the input side of an input slab waveguide 316 so that it adjoins its front end face 30.

Fig. 4 shows an embodiment in which an input slab waveguide 416 completely consists of a polymer part 424. In order to ensure that light propagating through the outer arms of the arrayed waveguides is subject of a stronger thermal compensation, the overall shape of the input slab waveguide 416 deviates from the usual symmetrical geometry (indicated by dotted line 26) as shown in Fig. 1. This design allows simple fabrication because no trenches have to be formed within the input slab waveguide 416.

In the embodiment of Fig. 5, an input slab waveguide 516 completely consists of a (polymer) material with opposite temperature dependence as compared to the arrayed waveguides 201...20k. As indicated by the axis of symmetry 50 and focal length f, the overall geometry of the input slab waveguide 516 is - in contrast to the embodiment shown in Fig. 4 - symmetrical with respect to the axis of symmetry 50. This requires to introduce different optical path lengths within the input slab waveguide 516 by other means.

At the input side of input slab waveguide 516, the usual geometry of input waveguides is shown in broken lines. As mentioned above, the input waveguides usually enter the input slab waveguide 516 perpendicularly, i.e. at right angles with respect to the curved front end face 30.

In the embodiment of Fig. 5, however, input waveguides 5141...514n do not enter the front end face 30 of the input slab waveguide 516 perpendicularly. Instead, an angle of 90°-α, wherein α denotes the deviation from the conventional perpendicular position, is formed between the front end face 30 and each input waveguide 5141...514n. This causes light that enters one of the input waveguides 5141...514n to propagate through the input slab waveguide 516 with a wave front that is correspondingly tilted. This has a similar effect as if the geometry of the input slab waveguide 516 was chosen as shown in Fig. 4, i.e. with an asymmetrical extension at the output side.

The angle α can be, for example, in the range of 1° to 8°, preferably within the range of 3° to 6°. The exact value of this angle depends on the overall design and the material parameters of the AWG 10.

As shown in Fig. 6, the above-mentioned effect can be further supported by laterally offsetting input waveguides 6141...614n by a distance Δ with respect to the position of the input waveguides 5141...541n as shown in Fig. 5 (see broken lines in Fig. 6).

In the embodiment of Fig. 6, arrayed waveguides 6201...620k are, as compared with the usual geometry as shown in Fig. 5 (see broken lines in Fig. 6), tilted by an angle β. Thus these waveguides do not form a right angle with the rear end face 32 of input slab waveguide 616. This ensures that a tilted wave front within the input slab waveguide 616 is coupled into the arrayed waveguides 6201...620k in a normal direction so that insertion losses are reduced. This measure can, of course, be taken also in the context of the embodiment of Fig. 5.

It should be noted that the design principles as shown in Figs. 5 and 6 may also be applied to input slab waveguides as shown in one of the preceding Figures. Thus there is a sufficient number of design parameters which can be optimized in order to achieve optimal thermal compensation by simultaneously keeping optical losses small.

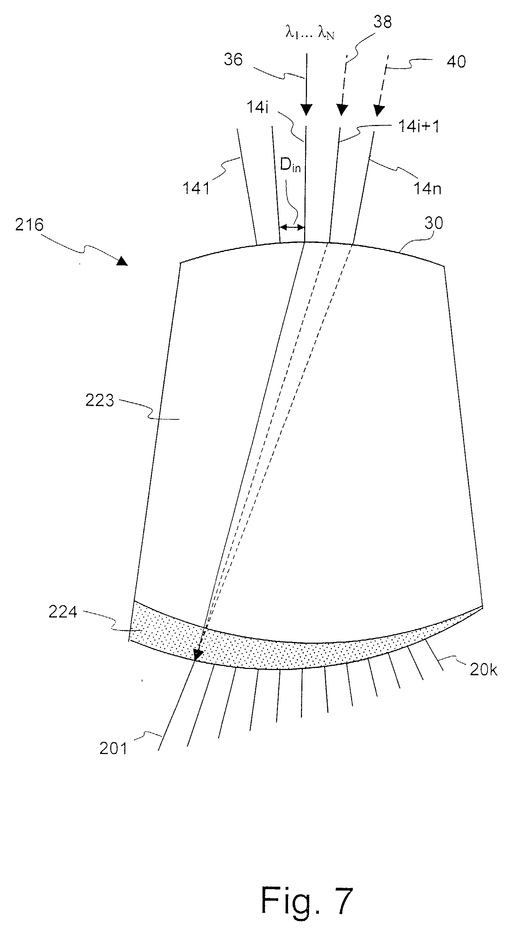

Fig. 7 shows an enlarged view of the input slab waveguide 216 of Fig. 2. As indicated in Fig. 1, the spacing Dᵢₙ between the input waveguides 141...14n at the front end face 30 of the input slab waveguide 16a, and the spacing Dₒᵤₜ between the output waveguides 221...22m at the corresponding end face of the output slab waveguide 18 are equal.

This allows to fine-tune the thermal compensation - without altering the central wavelength of AWG 10 - by selecting one of the input waveguides 141...14n, as is indicated in Fig. 7 by arrows 36, 38 and 40. To this end, light with different wavelengths λ₁...λ_{N} is coupled into a first input waveguide 14i (arrow 36). Then the light output is measured at different temperatures at the output waveguides 221...22m of AWG 10. Afterward light is coupled into a second adjacent input waveguide 14i+1 as indicated by arrow 38. The same measurements are repeated with this input waveguide 14i+1 and, if necessary, with some or all remaining input waveguides 141...14n. By comparing the measurements that have been obtained with the different input waveguides, it is possible to select a particular input waveguide 14j that shows optimal temperature compensation for the AWG 10.

Since spacing Dᵢₙ equals spacing Dₒᵤₜ, it is not possible to fine-tune the central wavelength of AWG 10 as is the case with conventional AWGs. However, effective fine-tuning of the central wavelength can be achieved by determining an appropriate value for the lateral displacement Δ (see Fig. 6).

It has to be noted that the advantageous embodiments as shown in Figs. 2 to 6 and the method of fine-tuning the AWG 10 according to Fig. 7 do not necessarily require only one single polymer part in the input slab waveguide. Although these measures allow to introduce different path lengths of the light in the input slab waveguide, these measures may also be applied to input slab waveguides with more than one polymer parts. The geometry of the input and arrayed waveguides as shown in Fig. 6 may, for example, be combined with a combination of the slab geometry of Figs. 2 and 3, i.e. with polymer parts at both longitudinal ends of the slab waveguide.

The foregoing features and principles may also be advantageously applied to the output slab waveguide 18, although the respective effects may then be different because of the phase shifts that have been induced by the arrayed waveguides 201...20k.

## Claims

**1.** Athermal arrayed waveguide grating (10) comprising:
a) an input slab waveguide (16; 216; 316; 416; 516; 616) being connected to at least one input waveguide (141...14n; 6141...614n),
b) an output slab waveguide (18) being connected to at least one output waveguide (221...22m), and
c) a plurality of arrayed waveguides (201...20k; 6201...620k) that
i) are arranged between the input slab waveguide (16; 216; 316; 416; 516; 616) and the output slab waveguide (18) and
ii) are made of a first material whose refractive index has a first type of temperature dependence,
**characterized in that**
d) the input slab waveguide (16; 216; 316; 416; 516; 616) comprises one single part (24; 224; 324; 424) that is completely made of a second material, said second material having a refractive index with a second type of temperature dependence that is opposite to the first type of temperature dependence.

**2.** The arrayed waveguide grating of claim 1, **characterized in that** said part (24; 224; 324; 424) is approximately wedge-shaped.

**3.** The arrayed waveguide grating of claim 1 or 2, **characterized in that** said part (24; 224; 324; 424) adjoins a curved longitudinal end face (30, 32) of the input slab waveguide (16; 216; 316; 416; 516; 616).

**4.** The arrayed waveguide grating of any or the preceding claims, **characterized in that** said part (24; 224; 324; 424) extends laterally from one side of the input slab waveguide (16; 216; 316; 416; 516; 616) to the opposite side.

**5.** The arrayed waveguide grating of claim 4, **characterized in that** said part (424) completely forms the input slab waveguide (416).

**6.** The arrayed waveguide grating of any of the preceding claims, **characterized in that** the at least one input waveguide (5141...514n; 6141...614n) and/or the plurality of arrayed waveguides (6201...620k) is connected to the input slab waveguide (516; 616) such that, in the plane of the grating (10), an angle other than 90° is formed between the at least one input waveguide (5141...514n; 6141...614n) and/or the plurality of arrayed waveguides (6201...620k), and a curved longitudinal end face (30, 32) of the input slab waveguide (516; 616). waveguide (6141...614n) is laterally offset (Δ) with respect to a symmetrical position.

**8.** The arrayed waveguide grating of one of the preceding claims, **characterized by** a plurality of input waveguides (141...14n) being separated at the input slab waveguide (16) by a spacing Dᵢₙ, and by a plurality of output waveguides (221...22m) being separated at the output slab waveguide (18) by a spacing Dₒᵤₜ, wherein Dᵢₙ equals Dₒᵤₜ.

**9.** Optical module comprising an arrayed waveguide grating of one of the preceding claims.

**10.** Method for athermalizing the arrayed waveguide grating (10) of claim 8, **characterized by** selecting a particular input waveguide (14i) from the plurality of input waveguides (141...14n) such that the thermal dependency of the arrayed waveguide grating (10) is minimized.

**11.** The method of claim 10, **characterized by** the following steps:
a) a first input waveguide (14i) is selected (36) from the plurality of input waveguides (141...14n);
b) light having a plurality of wavelengths (λ₁...λ_{N}) is coupled into the first input waveguide (14i);
c) the light output of each of the output waveguides (221...22m) is measured at different temperatures;
c) the light output of each of the output waveguides (221...22m) is measured at different temperatures;
d) a second input waveguide (14i+1) is selected (38) from the plurality of input waveguides (141...14n);
e) steps b) and c) are repeated respectively for the second input waveguide (14i+1);
f) the results of the measurements according to step c) that are obtained with different input waveguides (14i, 14i+1) are compared so as to determine the input waveguide with minimal thermal response.

**12.** The method of claim 11, **characterized in that** steps b) and c) are repeated with at least one further input waveguide.
